# EUROPEAN PATENT APPLICATION

(11) **EP 2 722 207 A1**
(43) Date of publication of application: **23.04.2014**
(21) Application number: 13189240.8
(22) Date of filing: 18.10.2013
(51) Int. Cl.: B60J 1/20

(54) **Sheet winding device for vehicle**

(30) Priority: 19.10.2012 JP 2012232226
(71) Applicant: AISIN SEIKI KABUSHIKI KAISHA, Kariya-shi, Aichi-ken 448-8650 (JP)
(72) Inventor: Nagashima, Yoji, Kariya-shi, Aichi-ken, 448-8650 (JP); Kitani, Takashi, Kariya-shi, Aichi-ken, 448-8650 (JP); Nakamura, Yoshitaka, Kariya-shi, Aichi-ken, 448-8650 (JP); Yoshikawa, Hirotaka, Kariya-shi, Aichi-ken, 448-8650 (JP)
(74) Representative: Winter, Brandl, Fürniss, Hübner, Röss, Kaiser, Polte - Partnerschaft

(57) **Abstract**

A sheet winding device (20) for vehicle includes a winding shaft (26), a sheet (21), a torsion coil spring (28) and a soundproofing tube (29, 30). The winding shaft (26) is axially supported on a vehicle body (10). The torsion coil spring (29) rotationally biases the winding shaft (26) in a winding direction of the sheet (21) and elastically deforms such that a meandering is increased relative to an axial direction of the torsion coil spring (28) in response to the rotation of the winding shaft (26). The soundproofing tube (29, 30) is arranged between the winding shaft (26) and the torsion coil spring (28) and includes at least one slit (29a, 30a, 30b) formed by cutting out at least one part on a circumference of the soundproofing tube (29, 30) over an entire length of the soundproofing tube (29, 30) in the axial direction.

## Description

### TECHNICAL FIELD

This disclosure generally relates to a sheet winding device for vehicle.

### BACKGROUND DISCUSSION

A known sheet winding device for vehicle is disclosed in JP2012-57364A (hereinafter referred to as Patent reference 1). As illustrated in Fig. 9, the sheet winding device for vehicle disclosed in Patent reference 1 includes a winding shaft 91 formed in a tubular shape and axially supported on a vehicle body. The winding shaft 91 winds and unwinds a sheet in response to a rotation of the winding shaft 91 to open and close an opening portion formed at the vehicle body.

As disclosed in Patent reference 1, the winding shaft 91 includes a torsion coil spring 92 positioned inside the winding shaft 91 and rotationally biasing the winding shaft 91 in a sheet winding direction. A soundproofing tube 93 is arranged between an inner circumference of the winding shaft 91 and an outer circumference of the torsion coil spring 92. The soundproofing tube 93 restrains an abnormal noise caused by a direct contact of the winding shaft 91 generally made of metal and the torsion coil spring 92.

According to the Patent reference 1, the soundproofing tube 93 is made of a material (for example, a resin material) which is not deformed when the torsion coil spring 92 is twisted. Accordingly, the soundproofing tube 93 is not creased and sandwiched within a pitch of the torsion coil spring 92 when the torsion coil spring 92 is twisted. Accordingly, the sheet may be wound and unwound further smoothly.

As disclosed in Patent reference 1, in a case where the torsion coil spring 92 is elastically deformed such that a meandering, or bending is increased in an axial direction in response to the rotation of the winding shaft 91 in a sheet unwinding direction, a degree of pressure contact between the torsion coil spring 92 and the soundproofing tube 93 is increased in response to the rotation of the winding shaft 91. When the degree of pressure contact between the torsion coil spring 92 and the soundproofing tube 93 is increased, the elastic deformation of the torsion coil spring 92 is restrained at the press-contact portion of the torsion coil spring 92 which is in press contact with the soundproofing tube 93, resulting in that intensive bending stress may be generated to a part of the torsion coil spring 92. Moreover, because of a sharp increase of the stress generated at the torsion coil spring 92 in accordance with a rotation amount of the winding shaft 91, the unwinding operation of the sheet may be disturbed. Alternatively, performance of the torsion coil spring 92 may be unstable because plastic deformation of the torsion coil spring 92 is induced.

A need thus exists for a sheet winding device for vehicle that restrains a torsion coil spring from generating intensive bending stress to a part of the torsion coil spring that rotationally biases a winding shaft in the sheet winding direction.

### SUMMARY

According to an aspect of this disclosure, a sheet winding device for vehicle includes a winding shaft formed in a cylindrical shape and axially supported on a vehicle body, and a sheet, one end of which fixed to the winding shaft and being wound and unwound in response to a rotation of the winding shaft for an opening portion formed at the vehicle body to be open and closed. The sheet winding device for vehicle further includes a torsion coil spring positioned inside the winding shaft, a first end portion of which fixed to the vehicle body and a second end portion of which fixed to the winding shaft to rotate integrally with the winding shaft, rotationally biasing the winding shaft in a winding direction of the sheet and elastically deforming such that a meandering is increased relative to an axial direction of the torsion coil spring in response to the rotation of the winding shaft in an unwinding direction of the sheet. The sheet winding device for vehicle further includes a soundproofing tube arranged between an inner circumference of the winding shaft and an outer circumference of the torsion coil spring, in which the soundproofing tube includes at least one slit formed by cutting out at least one part on a circumference, the circumference centered on an axis, of the soundproofing tube over an entire length of the soundproofing tube in the axial direction.

According to the construction of the disclosure, the torsion coil spring is radially enlarged and the torsion coil spring is elastically deformed such that the meandering, or bending is increased relative to the axial direction in response to the rotation of the winding shaft to the unwinding direction of the sheet. Accordingly, the degree of pressure contact between the torsion coil spring and the soundproofing tube is increased in response to the rotation of the winding shaft. When the degree of pressure contact between the torsion coil spring and the soundproofing tube is increased in response to the rotation of the winding shaft, the soundproofing tube is deformed to accord with a deformation of the torsion coil spring by using the slit for a restraining a constraint of the deformation. Accordingly, the torsion coil spring may be deformed (twisted) uniformly over the entire length of the torsion coil spring, resulting in that the torsion coil spring may be retrained from generating intensive bending stress to a part of the torsion coil spring.

According to another aspect of the disclosure, the torsion coil spring meanders in the axial direction when the sheet is in a wound state.

According to the construction of the disclosure, the torsion coil spring meanders, or bends, and is in press contact with the soundproofing tube when the sheet is in a wound state. Accordingly, the clearance generated between the torsion coil spring and the soundproofing tube is removed. Thus, when the sheet is in a wound state, the tapping sound caused by a vibration of the torsion coil spring when the vehicle vibrates may be retrained.

According to further aspect of the disclosure, the number of the slit is one.

According to the construction of the disclosure, the soundproofing tube is configured as a single component without being divided into plural components on the circumference of the soundproofing tube by including the single slit. Accordingly, the number of components and the man-hours for assembling can be reduced.

According to still another aspect of the disclosure, the torsion coil spring is always in press contact with the soundproofing tube regardless of the rotation amount of the winding shaft.

According to the construction of the disclosure, the torsion coil spring may be restrained from generating intensive bending stress to a part of the torsion coil spring that rotationally biases the winding shaft in the winding direction of the sheet.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a perspective view illustrating a roof of a vehicle on which a sheet winding device is to be mounted according to an embodiment disclosed here;

Fig. 2 is a perspective view of the sheet winding device of the embodiment;

Fig. 3 is a longitudinal sectional view of the sheet winding device of the embodiment;

Fig. 4 is a cross-sectional view of a winding shaft of the embodiment;

Fig. 5A is an exploded perspective view of the winding shaft of the embodiment;

Fig. 5B is a longitudinal sectional view of the winding shaft of the embodiment;

Fig. 6 is a longitudinal sectional view illustrating an operation of the winding shaft of the embodiment;

Fig. 7 is a graph illustrating a relation of a rotation amount of the winding shaft and a stress of a torsion coil spring according to the embodiment;

Fig. 8 is a cross-sectional view of a modified example of the embodiment; and

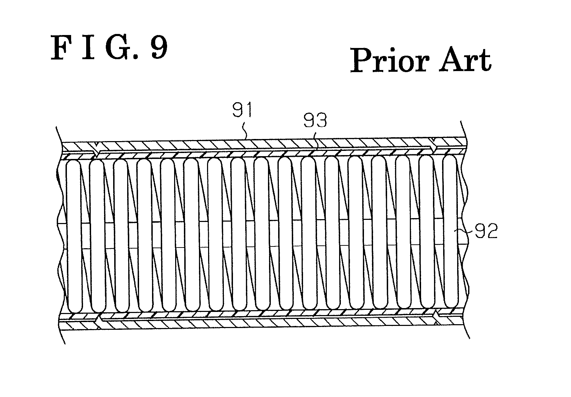

Fig. 9 is a longitudinal sectional view of a known sheet winding device.

### DETAILED DESCRIPTION

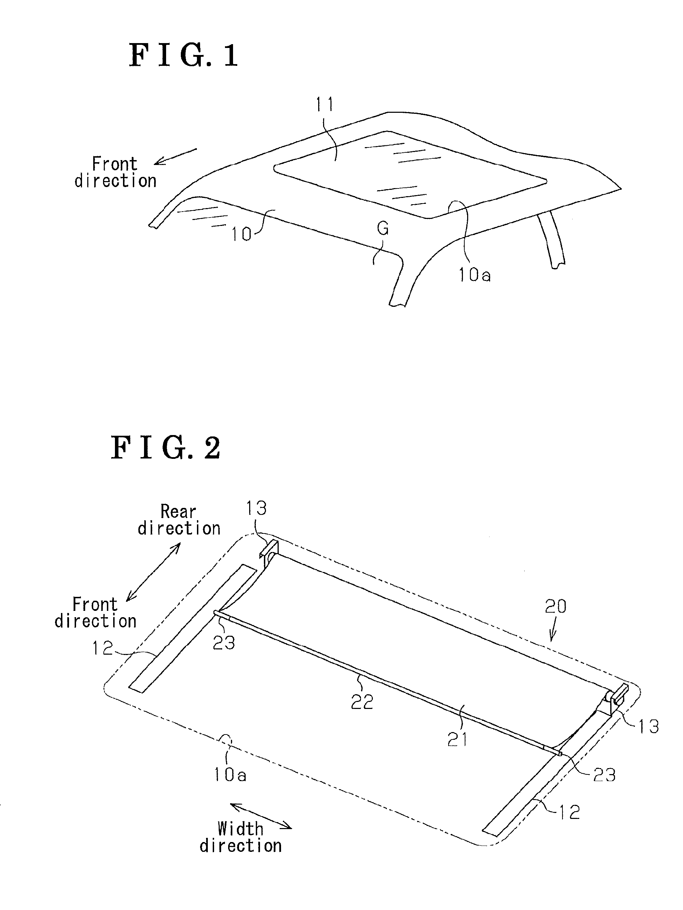

An embodiment of the disclosure will be described. Hereinafter, a vehicle front-rear direction is referred to as a front-rear direction while a vehicle width direction is referred to as a width direction. As illustrated in Fig. 1, a vehicle roof 10 (serving as a vehicle body), that is, a vehicle body of, for example, a vehicle, includes a roof opening portion 10a (serving as an opening portion) that is an opening portion formed in a substantially quadrangular shape, and a roof panel 11 made of glass and providing a translucent area at the roof opening portion 10a.

As illustrated in Fig. 2, the vehicle roof 10 includes a pair of guide rails 12 configured with, for example, an extrusion material made of aluminum alloy. The guide rails 12 are arranged at opposing rims in the width direction of the roof opening portion 10a and extended in the front-rear direction. Further, brackets 13 made from, for example, metal plate are standingly provided at a rear of the guide rails 12. The brackets 13 support a sheet winding device 20. The sheet winding device 20 includes a sheet 21, a garnish 22, and a pair of shoes 23. The sheet 21 is for light shielding. The garnish 22 is extended in the width direction and fixed on, for example, a front end of the sheet 21 in the front-rear direction. The pair of shoes 23 is arranged at opposing ends of the garnish 22 in the width direction and protrudes outward in the width direction. The pair of shoes 23 is attached to the guide rails 12 movably in the front-rear direction. The sheet winding device 20 is configured such that the sheet 21 is unwound by the shoes 23, along with the garnish 22, moving frontward along with the guide rails 12. Accordingly, the roof opening portion 10a is closed to shield the roof panel 11. Alternatively, the sheet winding device 20 is configured such that the sheet 21 is wound by the shoes 23, along with the garnish 22, moving rearward along with the guide rails 12. Accordingly, the roof opening portion 10a (and the roof panel 11) is opened.

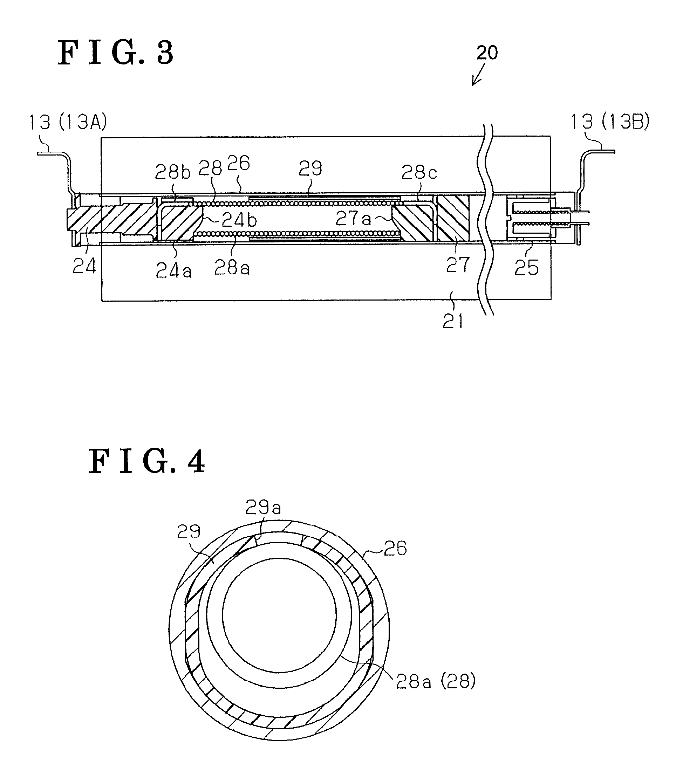

As illustrated in Fig. 3, a first end of the brackets 13 in the width direction (hereinafter also referred to as a first bracket 13A, left in Fig. 3) unrotatably supports a fixed shaft portion 24 extending axially in the width direction. The fixed shaft portion 24 is made of, for example, resin. The fixed shaft portion 24 includes a bearing 24a and a first spring holding portion 24b. The bearing 24a formed in a substantially cylindrical shape is arranged at an inner end portion of the fixed shaft portion 24 in the width direction. The first spring holding portion 24b formed in a substantially partially cylindrical shape is projected inwardly in the width direction from a center portion of the bearing 24a. A second end of the brackets 13 in the width direction (hereinafter also referred to as a second bracket 13B, right in Fig. 3) rotatably supports a rotary shaft 25 axially extending in the width direction.

Formed in a substantially cylindrical shape, a winding shaft 26 is configured with the extrusion material made of aluminum alloy and extended in the width direction. The bearing 24a of the fixed shaft portion 24 is positioned inside the winding shaft 26 in a manner of which the fixed shaft portion 24 is rotatable with a first end of the winding shaft 26. The rotary shaft 25 is positioned inside the winding shaft 26 in a manner of which the rotary shaft 25 is unrotatable with a second end of the winding shaft 26. That is, the first end of the winding shaft 26 surrounds the bearing 24a of the fixed shaft portion 24 and is rotatable relative to the first bracket 13A (the vehicle roof 10) while the second end of the winding shaft 26, along with the rotary shaft 25, is rotatable relative to the second bracket 13B (the vehicle roof 10).

An outer circumferential portion of the winding shaft 26 is fixed on a first end of the sheet 21 in the front-rear direction to wind the sheet 21 to the outer circumferential portion of the winding shaft 26. Thus, the sheet 21 is unwound in response to the rotation of the winding shaft 26 in one direction (unwinding direction) and wound in response to the rotation of the winding shaft 26 in the other direction (winding direction).

At a middle portion of the winding shaft 26 in an axial direction, a supporting member 27 formed in a substantially cylindrical shape and made of, for example, resin, is positioned inside the winding shaft 26 in an unrotatable manner. That is, the winding shaft 26 and the supporting member 27 are connected so that the winding shaft 26 and the supporting member 27 rotate integrally with each other. The supporting member 27 includes a second spring holding portion 27a formed in a substantially partially cylindrical shape. The second spring holding portion 27a is inwardly projected in the width direction from a center portion of the supporting member 27 and faced with the fixed shaft portion 24.

A torsion coil spring 28, made of, for example, iron, and arranged between the fixed shaft portion 24 and the supporting member 27 is positioned inside the winding shaft 26. The torsion coil spring 28 includes a coil portion 28a sandwiched between the fixed shaft portion 24 and the supporting member 27. The first and second spring holding portions 24b, 27a are positioned inside voids defined by inner rings of opposing ends of the coil portion 28a, respectively. The torsion coil spring 28 includes a first leg portion 28b (serving as a first end portion) and a second leg portion 28c (serving as a second end portion). The first leg portion 28b formed in a substantially L shape is a first end extending in the width direction from a first end of the coil portion 28a and facing with the fixed shaft portion 24. The second leg portion 28c formed in a substantially L shape is a second end extending in the width direction from a second end of the coil portion 28a and facing with the supporting member 27. The first leg portion 28b and the second leg portion 28c are fixed into the fixed shaft portion 24 and the supporting member 27, respectively, while the first and second spring holding portions 24b, 27a are positioned inside the voids defined by the inner rings of the opposing ends of the coil portion 28a.

For example, when the supporting member 27 together with the winding shaft 26 is rotated about the fixed shaft portion 24 from a free state of the torsion coil spring 28, the torsion coil spring 28 generates a biasing force trying to return to the free state. The torsion coil spring 28 is configured to always bias the supporting member 27 (the winding shaft 26) in a rotation direction to wind the sheet 21. When the winding shaft 26 rotates in the unwinding direction to unwind the sheet 21 from a state where the sheet 21 is wound, the torsion coil spring 28 generates the biasing force to return to the free state. A wound state of the sheet 21 corresponds to a full-open state of the sheet 21 at the roof opening portion 10a formed at the vehicle roof 10 (opening portion formed at the vehicle body). After the sheet 21 is released, the supporting member 27 together with the winding shaft 26 rotates in the winding direction to wind the sheet 21.

When the sheet 21 is in a wound state, the torsion coil spring 28 of the embodiment also generates the biasing force to return to the free state, and biases the winding shaft 26 together with the supporting member 27 to rotate in the winding direction. When the torsion coil spring 28 biases the winding shaft 26 together with the supporting member 27 to rotate in the winding direction, the torsion coil spring 28 is radially enlarged compared to an diameter of the torsion coil spring 28 in the free state and the torsion coil spring 28 meanders, or bends relative to the axial direction. The torsion coil spring 28 is radially enlarged and elastically deformed such that the meandering, or bending is increased relative to the axial direction in response to the rotation of the winding shaft 26 in the unwinding direction of the sheet 21. The coil portion 28a is twisted in an opposite direction to a winding direction of the coil portion 28a. Specifically, for example, when the coil portion 28a is wound in a right direction, the coil portion 28a is twisted in a left direction in response to the rotation of the winding shaft 26 in the unwinding direction of the sheet 21. On the contrary, when the coil portion 28a is wound in a left direction, the coil portion 28a is twisted in a right direction in response to the rotation of the winding shaft 26 in the unwinding direction of the sheet 21. Accordingly, the torsion coil spring 28 is elastically deformed such that the meandering, or bending is increased relative to the axial direction in response to the rotation of the winding shaft 26 in the unwinding direction of the sheet 21 spontaneously as a characteristic of the torsion coil spring 28.

A soundproofing tube 29 configured with, for example, the extrusion material made of resin is positioned inside the winding shaft 26 at the outer circumference of the coil portion 28a of the torsion coil spring 28. As illustrated in Fig. 4, the soundproofing tube 29 includes a slit 29a, formed by cutting out a part on a circumference, the circumference centered on an axis, of the soundproofing tube 29 over the entire length in the axial direction of the soundproofing tube 29. That is, the soundproofing tube has a substantially C-shaped cross-sectional shape. Because an inner diameter of the soundproofing tube 29 is set larger than an outer diameter of the coil portion 28a, a clearance is maintained between the soundproofing tube 29 and the coil portion 28a. However, a position, or an attitude of the coil portion 28a is fixed inside the soundproofing tube 29 by being in press contact with the soundproofing tube 29 because the coil portion 28a is elastically deformed such that the meandering, or bending is increased relative to the axial direction in response to the rotation of the winding shaft 26 in the unwinding direction of the sheet 21. Accordingly, the coil portion 28a is restrained from generating abnormal noise caused by contacting with the soundproofing tube 29 due to, for example, vibrations.

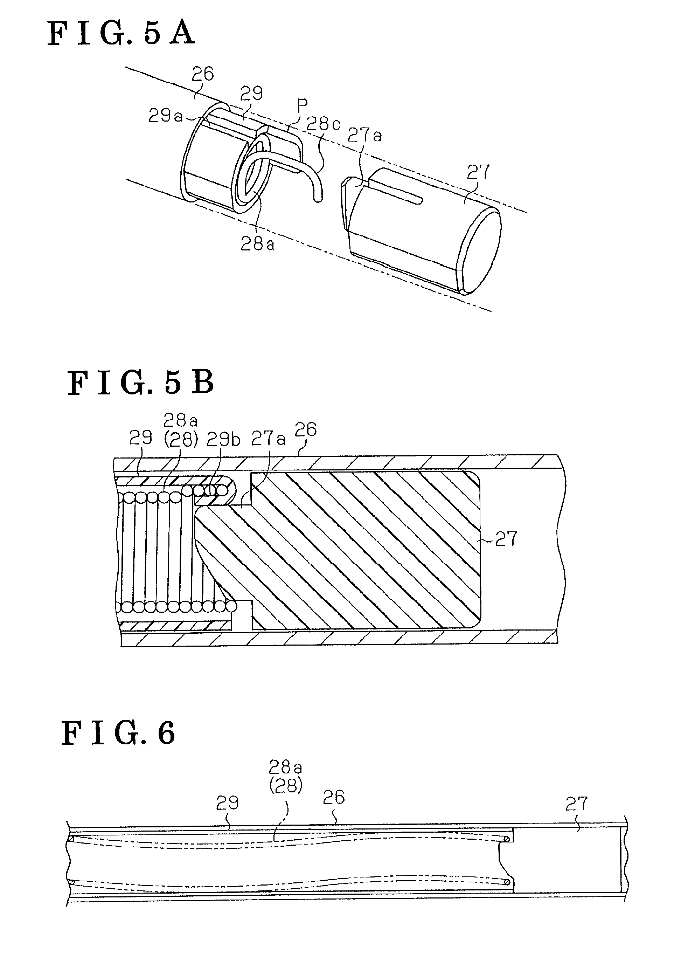

As illustrated in Figs. 5A and 5B, the soundproofing tube 29 is arranged between the inner circumference of the winding shaft 26 and the outer circumference of the coil portion 28a. The soundproofing tube 29 includes a protrusion P to form a positioning portion 29b. The protrusion P arranged at a predetermined angular position of the soundproofing tube 29 and protruding along the axial direction is folded inwardly to cover the end portion of the coil portion 28a to be the positioning portion 29b. The soundproofing tube 29 positioned inside the winding shaft 26 is restricted from rotating relative to the winding shaft 26 because the positioning portion 29b is sandwiched between the coil portion 28a and the second spring holding portion 27a. In addition, the soundproofing tube 29 is restricted from moving in the axial direction to be close to the fixed shaft portion 24 because the positioning portion 29b is sandwiched between the coil portion 28a and the second spring holding portion 27a. In other words, basically, the soundproofing tube 29 is allowed only to expand radially outward within the winding shaft 26.

Next, an operation of the embodiment will be described. As illustrated in Fig. 6, the torsion coil spring 28 (the coil portion 28a) positioned inside the soundproofing tube 29 (the winding shaft 26) is radially enlarged compared to the diameter of the torsion coil spring 28 in the free state and the torsion coil spring 28 meanders, or bend relative to the axial direction. The torsion coil spring 28 is radially enlarged and elastically deformed such that the meandering, or bending is increased relative to the axial direction in response to the rotation of the winding shaft 26 to the unwinding direction of the sheet 21. When the torsion coil spring 28 is radially enlarged and the torsion coil spring 28 is elastically deformed such that the meandering, or bending is increased relative to the axial direction in response to the rotation of the winding shaft 26 to the unwinding direction of the sheet 21, the soundproofing tube 29 is deformed (for example, deformed to expand radially outward) to accord with the deformation of the torsion coil spring 28 by using the slit 29a for restraining the constraint of the deformation. Accordingly, the torsion coil spring 28 may be deformed (twisted) uniformly over the entire length of the torsion coil spring 28, resulting in that the torsion coil spring 28 may be restrained from generating intensive bending stress to a part of the torsion coil spring 28.

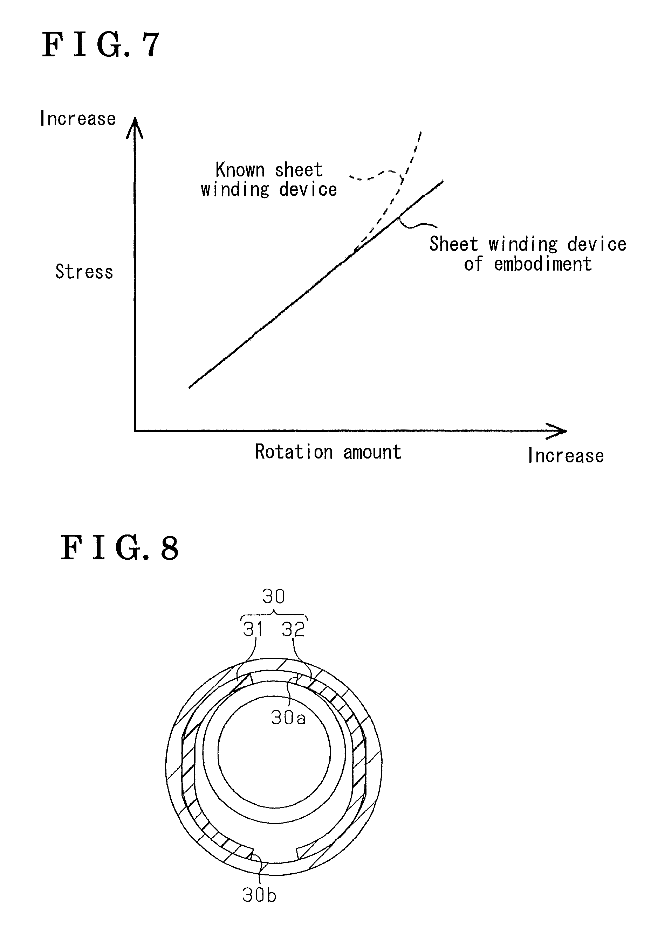

Fig. 7 illustrates a graph describing a relation of the rotation amount of the winding shaft 26 in an unwinding direction of the sheet 21 and the stress generated at the torsion coil spring 28. As described in a dotted line in Fig. 7, the known sheet winding device (corresponding to a cylindrically-shaped soundproofing tube without the slit 29a) generates a phenomenon of a rapid increase of the stress in accordance with the increase of the rotation amount of the winding shaft 26. Comparatively, according to the embodiment described in a solid line in Fig. 7, the phenomenon of the rapid increase is confirmed to be resolved although the stress generated at the torsion coil spring 28 is increased substantially proportionally in accordance with the increase of the rotation amount of the winding shaft 26.

As described above, according to the embodiment, following effects and advantages are attained.

First, according to the embodiment, the deformation (torsion) of the torsion coil spring 28 may be uniformed over the entire length of the torsion coil spring 28, resulting in that the torsion coil spring 28 may be restrained from generating intensive bending stress to a part of the torsion coil spring 28.

Second, according to the embodiment, the soundproofing tube 29 is configured as a single component without being divided into plural components on the circumference, the circumference centered on the axis, of the soundproofing tube 29 over the entire length of the soundproofing tube 29 in the axial direction by including the single slit 29a. Accordingly, the number of components and the man-hours for assembling can be reduced.

Third, according to the embodiment, the torsion coil spring 28 (the coil portion 28a) is always in press contact with the soundproofing tube 29 regardless of the rotation amount of the winding shaft 26. Accordingly, the clearance between the torsion coil spring 28 and the soundproofing tube 29 may be practically removed to restrain a tapping sound from generating by contacting the torsion coil spring 28 to the soundproofing tube 29. Unpleasant sensations, for example, when the sheet 21 is operated, when the vehicle doors are opened and closed and when a barometric pressure is changed may be relieved.

Fourth, according to the embodiment, when the sheet 21 is in an unwinding state, the diameter of the coil portion 28a is maximally enlarged and the meandering, or bending is maximized. That is, the degree of pressure contact of the coil portion 28a and the soundproofing tube 29 is maximized. Accordingly, abnormal noise caused by the contact of the coil portion 28a and the soundproofing tube 29 of the embodiment may be restrained most effectively.

Fifth, according to the embodiment, the torsion coil spring 28 meanders, or bend, and is in press contact with the soundproofing tube 29 when the sheet 21 is in a wound state. Accordingly, the clearance generated between the torsion coil spring 28 and the soundproofing tube 29 is removed. Thus, when the sheet is in a wound state, the tapping sound caused by a vibration of the torsion coil spring 28 when the vehicle vibrates may be restrained.

The aforementioned embodiment may be modified as follows.

As illustrated in Fig. 8, a soundproofing tube 30 may include two slits 30a, 30b, formed by cutting out the circumference, the circumference centered on the axis, of the soundproofing tube 30 over the entire the length of the soundproofing tube 30 in the axial direction of the soundproofing tube 30. That is, the soundproofing tube 30 is configured with two components which are a pair of tube portions 31, 32 divided into two in the circumferential direction of the soundproofing tube 30. Even though the soundproofing tube 30 is divided into two tubes, similar effects as the first, third, fourth effects may be obtained.

According to the aforementioned embodiment, when the sheet 21 is in a wound state, the torsion coil spring 28 does not have to meander, or bend.

According to the aforementioned embodiment, the diameter of the torsion coil spring 28 may be reduced in response to the rotation of the winding shaft 26 in the unwinding direction of the sheet 21.

According to the aforementioned embodiment, for example, the winding shaft 26 may be performed either automatically or manually to unwind the sheet 21.

According to the embodiment, the sheet winding device 20 is supported at a rear end portion of the roof opening portion 10a to unwind the sheet 21 to frontward in the vehicle front-rear direction. Alternately, the sheet winding device 20 may be supported at a front end portion of the roof opening portion 10a to unwind the sheet 21 to rearward in the vehicle front-rear direction.

According to the aforementioned embodiment, the sheet winding device 20 may be arranged at a front glass G (see Fig. 1), side glass and rear glass of the vehicle to open and close corresponding opening portions.

## Claims

1. A sheet winding device (20) for vehicle, comprising:
a winding shaft (26) formed in a cylindrical shape and axially supported on a vehicle body (10);
a sheet (21), one end of which fixed to the winding shaft (26), the sheet (21) being wound and unwound in response to a rotation of the winding shaft (26) for an opening portion (10a) formed at the vehicle body (10) to be open and closed;
a torsion coil spring (28) positioned inside the winding shaft (26), the torsion coil spring (28), a first end portion (28b) of which fixed to the vehicle body (10) and a second end portion (28c) of which fixed to the winding shaft (26) to rotate integrally with the winding shaft (26), the torsion coil spring (28) rotationally biasing the winding shaft (26) in a winding direction of the sheet (21), the torsion coil spring (28) elastically deforming such that a meandering is increased relative to an axial direction of the torsion coil spring (28) in response to the rotation of the winding shaft (26) in an unwinding direction of the sheet (21); and
a soundproofing tube (29, 30) arranged between an inner circumference of the winding shaft (26) and an outer circumference of the torsion coil spring (28), wherein the soundproofing tube (29, 30) includes at least one slit (29a, 30a, 30b) formed by cutting out at least one part on a circumference, the circumference centered on an axis, of the soundproofing tube (29, 30) over an entire length of the soundproofing tube (29, 30) in the axial direction.

2. The sheet winding device (20) for vehicle according to claim 1, wherein the torsion coil spring (28) meanders relative to the axial direction when the sheet (21) is in a wound state.

3. The sheet winding device (20) for vehicle according to either claim 1 or claim 2, wherein a number of the slit (29a, 30a, 30b) is one.

4. The sheet winding device (20) for vehicle according to any one of claims 1 to 3, wherein the torsion coil spring (28) is in press contact with the soundproofing tube (29, 30) regardless of a rotation amount of the winding shaft (26).
